# EUROPEAN PATENT SPECIFICATION

(11) **EP 0 992 962 B1**
(45) Date of publication and mention of the grant of the patent: **25.02.2004**
(21) Application number: 99119854.0
(22) Date of filing: 07.10.1999
(51) Int. Cl.: G08G 1/09

(54) **Traffic information servicing method**
Verfahren zur Bereitstellung von Verkehrsinformationen
Méthode pour fournir des informations de circulation

(30) Priority: 10.10.1998 KR 9842435
(43) Date of publication of application: 12.04.2000
(73) Proprietor: SAMSUNG ELECTRONICS CO., LTD., Suwon-City, Kyungki-do (KR)
(72) Inventor: Kim, Beom-seok, Suwon-city, Kyungki-do (JP)
(74) Representative: Grünecker, Kinkeldey, Stockmair & Schwanhäusser Anwaltssozietät

(56) References cited:
- EP-A- 0 756 153
- EP-A- 0 793 166
- DE-A- 19 643 454

## Description

### BACKGROUND OF THE INVENTION

### 1. Field of the Invention

The present invention relates to a traffic information servicing method, and more particularly, to a traffic information servicing method for providing traffic information.

### 2. Description of the Related Art

In general, a terminal in a car receives general traffic information from a traffic information providing system. For example, a traffic information providing system such as the vehicle Information and communication system VICS and the data radio channel DARC is not for a specific car and transmits previously collected traffic information of an unspecific area to an unspecific car by voice and data.

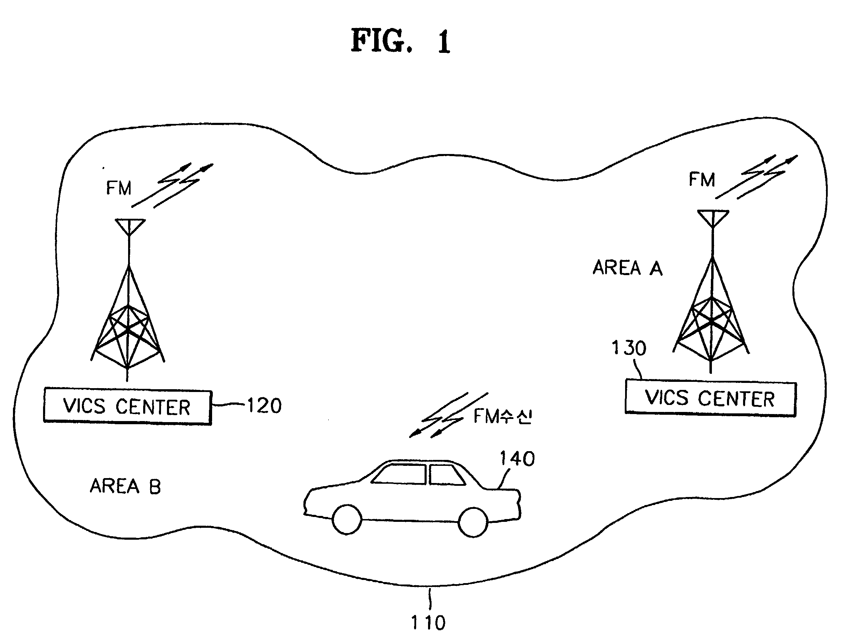

FIG. 1 shows a traffic information service system using a conventional VICS.

A first VICS center 130 of area A and a second VICS center 120 of area B exist in a VICS area 110. The first VICS center 130 transmits traffic information collected in the area A in the form of data to a car navigation terminal 140 built in a car through in FM broadcast. The car navigation terminal 140 receives the information of the area A through the FM broadcast and can use the received information as visible information.

As mentioned above, the VICS transmits the collected traffic information of the specific area in the form of data to a general user through in the FM broadcast. A user who has the system can use the traffic information of the concerned area.

However, only unidirectional communication can be performed in the VICS. Enormous expenses and much installation time are spent on collecting the traffic information, establishing the VICS center, and respective terminal manufacturers and VICS center managers establishing a VICS data format. It is difficult for a car of the area A to obtain the traffic information of the area B since the traffic information of the specific area is provided.

### SUMMARY OF THE INVENTION

It is an object of the present invention to provide a traffic information servicing method for receiving traffic information desired by a user conveniently by transmitting and receiving data between a navigation device installed in a car and an information center.

Accordingly, to achieve the above object, there is provided a traffic information servicing method including a car navigation device connected to an information center for providing traffic information according to received traffic information, a radio telephone, and an adaptor for controlling a radio telephone, for transmitting car information and traffic information to the information center and receiving the car information and the traffic information from the traffic information center, comprising the steps of transmitting the location of a car and information on the car from a car navigation device to the traffic information center, analyzing the location and traveling direction of a car by the location of the car and the information on the car, received from the traffic information center, determining the number and order of areas in predetermined units corresponding thereto, and transmitting traffic information in the areas to the car navigation device according to the number and order of the determined areas.

### BRIEF DESCRIPTION OF THE DRAWINGS

The above object and advantages of the present invention will become more apparent by describing in detail a preferred embodiment thereof with reference to the attached drawings in which:
FIG. 1 shows a traffic information service system using a conventional VICS;
FIG. 2 shows the structure of a traffic information service system according to the present invention;
FIG. 3 is a flowchart showing a traffic information servicing method including the system of FIG. 2; and
FIG. 4 shows an example of map information for servicing traffic information.

### DESCRIPTION OF THE PREFERRED EMBODIMENTS

Hereinafter, a preferred embodiment of the present invention will be described with reference to the attached drawings.

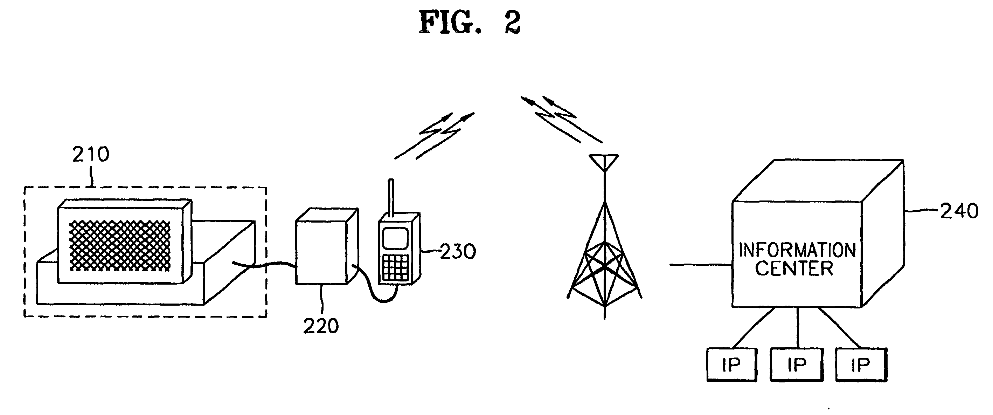

FIG. 2 shows the structure of a traffic information servicing system according to the present invention.

A car navigation device 210 connected to an adaptor 220 and a radio telephone 230 transmits a traffic information to an information center 240 and receives the various items of information on daily living and traffic information from the information center 240. The information center 240 receives the various items of information on daily living and traffic information from a plurality of information providers (IP). The received information is processed by a car navigation device 210 to be displayed as information desired by a user. The IP collects information on daily living such as news, stock quotes, weather, e-mail and traffic information such as traffic congestion, traffic accidents, and road conditions of a specific area and provides the collected information to the information center 240.

When a user operates the car navigation device 210 and wishes to obtain traffic information, the car navigation device 210 requests the adaptor 220 to telephone the information center 240. The adaptor 220 controls the radio telephone 230 so that communication between the information center 240 and the navigation device 210 can be performed. When the connection is completed by the adaptor 220, the navigation device 210 transmits the current location of the car to the information center 240 and requests the traffic information of the area. The information center 240 recognizes the location of the car received from the navigation device 210 and transmits the traffic information around the car to the navigation device 210 in a known order.

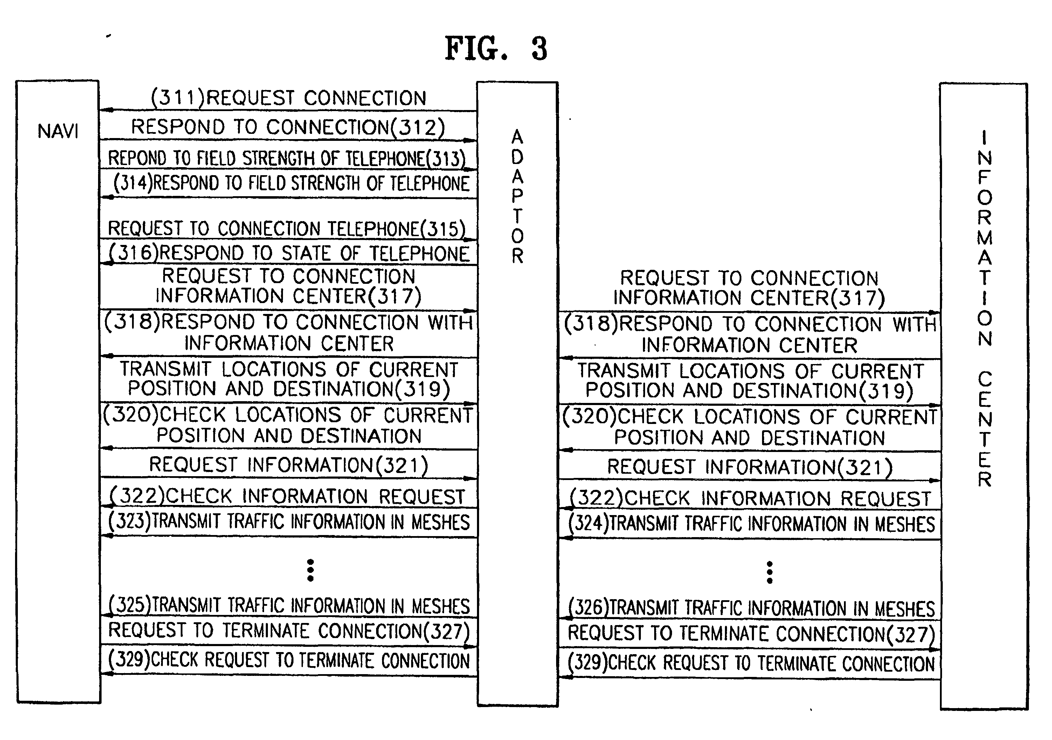

FIG. 3 is a flowchart showing a traffic information servicing method including the system of FIG. 2.

The adaptor 220 requests connection with peripheral devices so that the navigation device 210 is communicable in step 311. The navigation device 210 transmits a connection response signal to the adaptor 220 in step 312. The navigation device 210 requests the field strength of the radio telephone 230 to the adaptor 220 in step 313.

The adaptor 220 displays the field strength of the radio telephone 230 to the screen of the navigation device 210 so that the user can make a telephone call, looking at the field strength in step 314. The navigation device 210 requests connection with the radio telephone 230 to the adaptor 220 in order to receive traffic information and information on daily living in step 315. The adaptor 220 announces the state of the radio telephone 230, i.e., whether a service can be performed and the power on/off state to the navigation device 210 in step 316.

The navigation device 210 moves to an information request screen when the radio telephone 230 is determined to be in a state in which service can be performed through the adaptor 220 and requests connection with the information center 240 when the user requests specific information in step 317. The information center 240 analyzes the identifier (ID) of the user when the connection request is received and transmits whether the connection can be performed to the navigation device 210 in step 318. A navigation device 310 transmits the current location of the car, specific location information around the car, and information on cars around the car to the information center 240 in step 319. Here, the information on cars includes speed, location, direction, software version, and map version. The information center 240 checks the current location and the location of a destination by the location information received from the navigation device 210 and transmits the locations to the navigation device 210 in step 320.

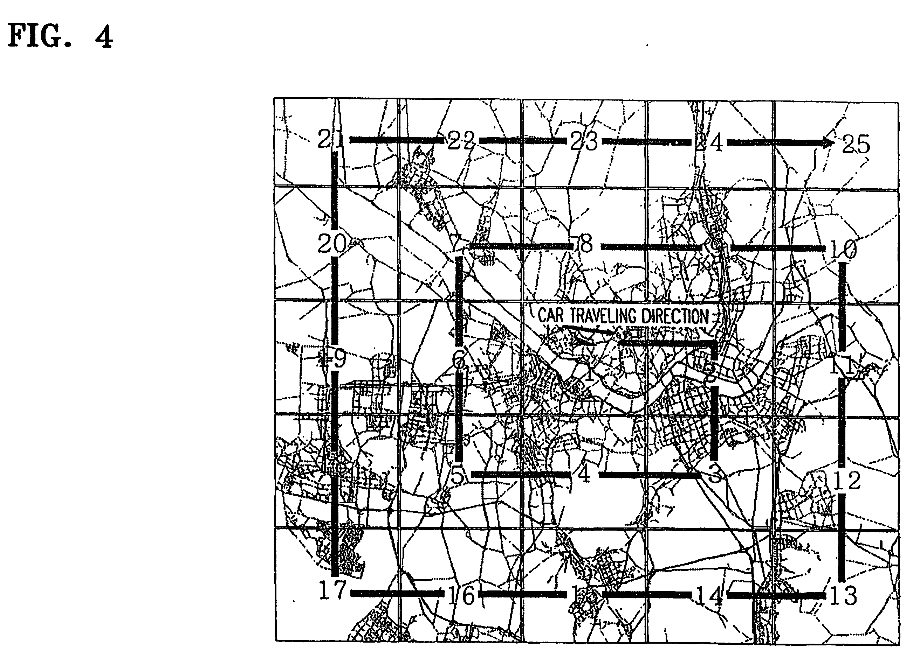

When the navigation device 210 requests traffic information to the information center 240 through the adaptor 220 in step 321, the information center 230 transmits a traffic information request check signal to the navigation device 210 in step 322. The information center 240 analyzes the locations and traveling directions of cars using various items of information on cars received from the navigation device 210 and transmits traffic information in meshes corresponding to the location of the current car, i.e., the traffic information in which the number and order of the meshes are determined to the navigation device 210 in steps 324 through 326. Here, the mesh is a unit of areas obtained by dividing a map downward and across. As shown in FIG. 4, when the number of the meshes of a region to which the traffic information is to be provided is 25, the 25 areas are transmitted in a determined order. In FIG. 4, when the traveling direction of the car is southeast, east is a first direction and south is a second direction.

Therefore, the information center 230 transmits the mesh including the coordinates of the current car first, an adjacent mesh in the first direction of the car second, and an adjacent mesh in the second traveling direction of the car third and sequentially transmits meshes from a fourth one on the basis of the mesh transmitted first.

When the navigation device 210 completes receiving the traffic information in step 327, the navigation device 210 requests to terminate connection with the information center 240. Continuously, the information center 240 transmits a connection termination request check signal to the navigation device 210 in step 329.

The present invention is not restricted to the above-mentioned embodiment, and it is clearly understood that many variations are possible within the scope of the present invention by anyone skilled in the art.

As mentioned above, according to the present invention, it is possible to transmit and receive information on daily living or the traffic information since a bidirectional communication can be performed. Although the user request to stop transmission in a necessary time, already received information is effective. Also, only information of the received part is displayed, the user can reduce fees such as telephone charges by receiving the traffic information only for the necessary time. When a destination is set in the navigation device, it is possible to transmit the current location and the location of the destination to the traffic information center. Therefore, it is possible to receive information on the current location and the traffic information desired by the user.

## Claims

1. A traffic information servicing method including a car navigation device connected to an information center for providing traffic information according to received traffic information, a radio telephone, and an adaptor for controlling a radio telephone, for transmitting car information and traffic information to the information center and receiving the car information and the traffic information from the traffic information center, comprising the steps of:
transmitting the location of a car and information on the car from a car navigation device to the traffic information center;
analyzing the location and traveling direction of a car by the location of the car and the information on the car, received from the traffic information center, determining the number and order of areas in predetermined units corresponding thereto, and transmitting traffic information in the areas to the car navigation device according to the number and order of the determined areas.

2. The traffic information servicing method of claim 1, wherein the car information includes speed, location, car traveling direction, car emergency state, software version, and map version.

3. The traffic information servicing method of claim 1, wherein the car navigation device transmits car location information to the information center and receives information on an area around the car.

4. The traffic information servicing method of claim 1, wherein the car navigation device receives information on a destination and on an area around a specific location from the information center by transmitting a destination and a specific location to the information center.

5. The traffic information servicing method of claim 1, wherein the information center receives the location of the car and the traveling direction of the car and transmits traffic information from the area including the car to an adjacent area of the car traveling direction.

6. The traffic information servicing method of claim 5, wherein the traffic information center transmits the area in a predetermined unit including coordinates of a current car first, an adjacent area in a first direction of the car second, and an adjacent mesh in a second traveling direction third and sequentially transmits meshes from a fourth one on the basis of the area transmitted first.

## Patentansprüche

1. Verkehrsinformations-Versorgungsverfahren, das ein Kraftfahrzeug-Navigationsgerät, das mit einem Informationszentrum zum Bereitstellen von Verkehrsinformationen entsprechend empfangener Verkehrsinformationen verbunden ist, ein Funktelefon und einen Adapter zum Steuern eines Funktelefons enthält, um Kraftfahrzeug-Informationen und Verkehrsinformationen zu dem Informationszentrum zu senden und die Kraftfahrzeug-Informationen sowie die Verkehrsinformationen von dem Verkehrsinformationszentrum zu empfangen, wobei es die folgenden Schritte umfasst:
Senden des Standorts eines Kraftfahrzeugs und von Informationen über das Kraftfahrzeug von einem Kraftfahrzeug-Navigationsgerät zu dem Verkehrsinformationszentrum;
Analysieren des Standorts und der Fahrrichtung eines Kraftfahrzeugs anhand des Standorts des Kraftfahrzeugs und der Informationen über das Kraftfahrzeug, die von dem Verkehrsinformationszentrum empfangen werden, Bestimmen der Anzahl und der Reihenfolge von Bereichen in vorgegebenen Einheiten, die diesen entsprechen, und Senden von Verkehrsinformationen in den Bereichen an das Kraftfahrzeug-Navigationsgerät entsprechend der Anzahl und der Reihenfolge der vorgegebenen Bereiche.

2. Verkehrsinformations-Versorgungsverfahren nach Anspruch 1, wobei die Kraftfahrzeug-Informationen Geschwindigkeit, Standort, Fahrzeug-Fahrtrichtung, Fahrzeug-Notfallzustand, Software-Version und Karten-Version enthalten.

3. Verkehrsinformations-Versorgungsverfahren nach Anspruch 1, wobei das Kraftfahrzeug-Navigationsgerät Kraftfahrzeugstandort-Informationen an das Informationszentrum sendet und Informationen über einen Bereich um das Kraftfahrzeug herum empfängt.

4. Verkehrsinformations-Versorgungsverfahren nach Anspruch 1, wobei das Kraftfahrzeug-Navigationsgerät Informationen über ein Ziel und einen Bereich um einen bestimmten Standort von dem Informationszentrum empfängt, indem es ein Ziel und einen bestimmten Standort an das Informationszentrum sendet.

5. Verkehrsinformations-Versorgungsverfahren nach Anspruch 1, wobei das Informationszentrum den Standort des Kraftfahrzeugs und die Fahrtrichtung des Kraftfahrzeugs empfängt und Verkehrsinformationen von dem Bereich, der das Kraftfahrzeug einschließt, bis zu einem angrenzenden Bereich der Kraftfahrzeug-Fahrrichtung sendet.

6. Verkehrsinformations-Versorgungsverfahren nach Anspruch 5, wobei das Verkehrsinformationszentrum den Bereich in einer vorgegebenen Einheit, die Koordinaten eines aktuellen Kraftfahrzeugs einschließt, an erster Stelle, einen angrenzenden Bereich in einer ersten Richtung des Kraftfahrzeugs an zweiter Stelle und eine angrenzende Masche in einer zweiten Fahrtrichtung an dritter Stelle sendet und anschließend Maschen von einer vierten an auf Basis des zuerst gesendeten Bereiches sendet.

## Revendications

1. Procédé pour un service d'informations, incluant un dispositif de navigation de voiture connecté à un centre d'informations, pour fournir des informations de trafic en fonction d'informations de trafic reçues, un radiotéléphone, et un adaptateur pour commander un radiotéléphone, pour transmettre des informations de voiture et des informations de trafic au centre d'informations et pour recevoir les informations de voiture et les informations de trafic en provenance du centre d'informations de trafic, comprenant les étapes consistant :
à transmettre la position d'une voiture et des informations relatives à la voiture, d'un dispositif de navigation de voiture vers le centre d'informations de trafic ;
à analyser la position et la direction de déplacement d'une voiture par la position de la voiture et les informations relatives à la voiture, reçues en provenance du centre d'informations de trafic ;
à déterminer le nombre et l'ordre de zones dans des unités prédéterminées qui leur correspondent, et à transmettre, au dispositif de navigation de voiture, les informations de trafic dans les zones en fonction du numéro et de l'ordre des zones déterminées.

2. Procédé pour un service d'informations de trafic selon la revendication 1, dans lequel les informations de voiture comprennent la vitesse, la position, la direction de déplacement de la voiture, la condition d'urgence de la voiture, la version de logiciel et la version de carte.

3. Procédé pour un service d'informations de trafic selon la revendication 1, dans lequel le dispositif de navigation de voiture transmet les informations de position de voiture au centre d'informations et reçoit des informations relatives à une zone autour de la voiture.

4. Procédé pour un service d'informations de trafic selon la revendication 1, dans lequel le dispositif de navigation de voiture reçoit, en provenance du centre d'informations, des informations relatives à une destination et à une zone autour d'une position spécifique, en transmettant, au centre d'informations, une destination et une position spécifique.

5. Procédé pour un service d'informations de trafic selon la revendication 1, dans lequel le centre d'informations reçoit la position de la voiture et la direction de déplacement de la voiture, et transmet des informations de trafic, de la zone incluant la voiture à une zone adjacente de la direction de déplacement dans la voiture.

6. Procédé pour un service d'informations de trafic selon la revendication 5, dans lequel le centre d'informations de trafic transmet la zone dans une unité prédéterminée incluant les coordonnées d'une voiture actuelle, en premier, une zone adjacente suivant une première direction de la voiture, en second, et une maille adjacente suivant une seconde direction de déplacement, en troisième, puis transmet, séquentiellement, les mailles à partir d'une quatrième, sur la base de la zone transmise en premier.
